# EUROPEAN PATENT APPLICATION

(11) **EP 2 869 210 A1**
(43) Date of publication of application: **06.05.2015**
(21) Application number: 12879803.0
(22) Date of filing: 29.06.2012
(51) Int. Cl.: G06F 17/21

(54) **DOCUMENT PROCESSING SYSTEM, ELECTRONIC DOCUMENT, DOCUMENT PROCESSING METHOD, AND PROGRAM**

(71) Applicant: SKK Ltd., Tokyo 162-0054 (JP)
(72) Inventor: MAEDA Takeo, Tokyo 162-0054 (JP)
(74) Representative: Appelt, Christian W.
(86) International application number: PCT/JP2012/066818
(87) International publication number: WO 2014/002281

(57) **Abstract**

A document processing system 10 includes a character code changing means 11A that records font data of characters in a sentence in the order of appearance of the characters, and changes character codes of the characters the font data of which were recorded into converted character codes consisting of order numbers of the font data, a conversion table creating means 11B that creates a conversion table showing correspondences between the character codes and the converted character codes, and an output means 11C that outputs characters in fonts according to the font data. The character code changing means 11A records font data of characters input by an input device 15 in the order of the characters, and changes character codes of the characters the font data of which were recorded into converted character codes. Accordingly, a document processing system, an electronic document, and a document processing method can be provided which can prevent digital copying in character codes while reducing the data amount.

## Description

### [Technical Field]

The present invention relates to a document processing system, an electronic document, a document processing method and program, and specifically, to improvements in security technology and compression technology by using document data and font data.

### [Background Art]

In recent years, UTF-8, which can use ISO/IEC 10646 (UCS) and Unicode, has been adopted in some document processing systems and electronic documents. The UTF-8 is a character coding system using 1-byte code units, and for compatibility with ASCII characters, the same portion as that of ASCII is coded by 1 byte, and other portions are coded by 2 to 6 bytes. A document mainly composed of ASCII characters can receive the benefits of Unicode without greatly increasing the data size.

Exchange of characters among computers is performed based on character codes standardized on the basis of a coding technology. As the number of characters (number of character forms) to be standardized increases, the data amount to be handled with the computers also increases. To solve the problem of the data amount increase, there is also an encoding system for efficiently handling character codes. In such an encoding system, for example, by varying the number of bytes, the data amount is reduced, so that the first number of the character code has a small data amount, and the last character has a large data amount. For example, the alphabet "a" is expressed as "01100001" using 0 and 1 (1 byte: 1 control bit + 7 sign bits), however, "JITSU" ("day" in Japanese character) is expressed as "111001101001011110100101" (3 bytes: 8 control bits + 16 sign bits).
The maximum data width in the system of UTF-8 is "111111011011111110111111101111111011111110111111" (6 bytes: 17 control bits + 31 sign bits). In this case, more than 2 billion characters can be handled.

Character forms can be switched by using variation selectors defined in Unicode. Variation selectors are designated at 256 character code positions of "U+FE00 to U+FE0F" and "U+E0100 to U+E01EF" in Unicode, and use 3 to 4 bytes in UTF-8. A variation selector can express a character form different from the form of a basic character by being arranged next to the basic character.

As character coding systems, there are various kinds such as UTF-16 and UTF-32 corresponding to Unicode, Shift-JIS, and EUC, etc., in addition to UTF-8, and many of these adopt a method in which the number of bytes varies according to the character code position. Moreover, there are methods of expressing various characters by using only ASCII characters like URL encoding.

As security on computers, character codes based on standards are used, and by applying an encryption technology to the data of the character codes, a countermeasure to prevent the content from being leaked to the outside has been adopted. However, encryption technologies are developed under the premise that decoding is performed on computers, and if a cryptanalysis is found, the content of data to be communicated are all decrypted.

It is practically difficult to prevent content mainly composed of characters such as an electronic book from being copied. Further, font data that are used for expressing sentences cannot be flexibly used in electronic books in order to prevent the font data from being leaked through digital copying. Therefore, in electronic media, expressions as designs of types tend to be poor.

In Patent Literature 1, a document processing system is described which creates exclusive fonts by randomly changing a table showing correspondences between character codes and glyphs inside the fonts, and replaces character codes of an electronic document by the coding system of the exclusive fonts so that the electronic document becomes garbled to keep only the character portions secret in a computer in which the exclusive fonts are not installed.

On the other hand, PDF has a feature of embedding character data in the PDF data. By generating a PDF file and embedding font information, the font information can be held by the generated document itself. Accordingly, even a font that a terminal on the output side does not have can be output without fail, and a document with excellent reproducibility can be realized. As font embedding, 'subset embedding' by which only fonts in use are embedded and 'full embedding (complete embedding)' by which all characters included in the fonts are embedded are available.

Patent Literature 2 describes an information processing device that makes an inquiry as to whether or not to embed font information on the basis that an electronic document was created in which figure and character editing commands were reflected.

### [Citation List]

### [Patent Literature]

[Patent Literature 1] JP 2007-109158 A
[Patent Literature 2] JP 2006-107033 A

### [Summary of Invention]

### [Technical Problem]

However, such conventional document processing systems have the following problems.

In the document processing system described in Patent Literature 1, a conversion table for changing the correspondence between character codes and fonts must be created in advance. It is presumed that this conversion table greatly differs depending on the kind of the document and the environment of the user's usage. Creation in advance of a conversion table to meet all of these requirements requires effort and cost. In order to increase the effectiveness of conversion, a conversion table the data amount of which is large must be created in advance. Further, a system for updating this conversion table must also be constructed.

Into the information processing device described in Patent Literature 2, font data must be loaded in advance. A number of such font data must be prepared according to kinds of documents. Further, a system for updating such font data must be constructed.

An object of the present invention is to provide a document processing system, an electronic document, and a document processing method and program which can prevent digital copying in character codes while reducing the data amount.

### [Solution to Problem]

A document processing system according to the present invention is a document processing system that creates an electronic document in which font data can be embedded, comprising: a character code changing means that records font data of characters in a sentence in the order of appearance of the characters, and changes character codes of the characters the font data of which were recorded into converted character codes consisting of order numbers of the font data; a conversion table creating means that creates a conversion table showing correspondences between the character codes and the converted character codes; and an output means that outputs characters in fonts according to the font data.

An electronic document according to the present invention is created by the above-described document processing system.

A document processing system according to the present invention is a document processing system that creates an electronic document in which font data can be embedded, comprising: an input means that inputs characters; a character code changing means that records font data of characters input by the input means in the order of appearance of the characters, and changes character codes of the characters the font data of which were recorded into converted character codes consisting of order numbers of the font data; a conversion table creating means that creates a conversion table showing correspondences between the character codes and the converted character codes; and an output means that outputs characters in fonts according to the font data.

A document processing method according to the present invention is a document processing method for creating an electronic document in which font data can be embedded, comprising the steps of: recording font data of characters in a sentence in the order of appearance of the characters, and changing character codes the font data of which were recorded into converted character codes consisting of order numbers of the font data; creating a conversion table showing correspondences between the character codes and the converted character codes; and outputting characters in fonts according to the font data.

The present invention is a program for making a computer function as the document processing system.

### [Advantageous Effects of Invention]

According to the present invention, it is possible to prevent digital copying in character codes while reducing the data amount.

### [Brief Description of Drawings]

[Fig. 1] Fig. 1 is a diagram showing a constitution of a document processing system according to a first embodiment.
[Fig. 2] Fig. 2 is a flowchart describing operation of the document processing system according to the first embodiment.
[Fig. 3] Fig. 3 is a diagram describing a structure of an electronic document subjected to document processing by the document processing system according to the first embodiment.
[Fig. 4] Figs. 4 are diagrams describing document data of the document processing system according to the first embodiment in comparison with a conventional example.
[Fig. 5] Fig. 5 is a flowchart showing an operation of restoring the document of the document processing system according to the first embodiment.
[Fig. 6] Fig. 6 is a flowchart showing an operation of the document processing system according to a second embodiment.

### [Description of Embodiments]

Hereinafter, embodiments of the present invention are described in detail with reference to the accompanying drawings.

### (First Embodiment)

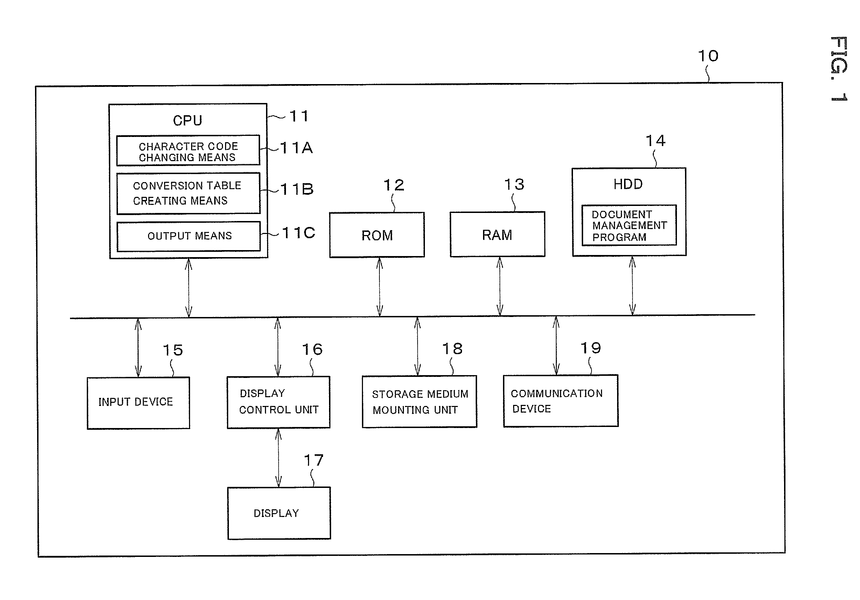

Fig. 1 is a diagram showing a constitution of a document processing system according to a first embodiment of the present invention. Fig. 1 is a block diagram in a case where the document processing system is constituted by a PC (Personal Computer).

As shown in Fig. 1, the document processing system 10 includes a CPU 11, a ROM 12, a RAM 13, an HDD 14, an input device 15, a display control unit 16, a display 17, a storage medium mounting unit 18, and a communication device 19 that are connected to each other by buses.

The CPU 11 controls the entire PC, and executes a document processing program in the RAM 13 to make the PC function as the document processing system. The CPU 11 has functions as a character code changing means 11A that records font data of characters in a sentence in the order of appearance of the characters, and changes character codes of the characters the font data of which were recorded into converted character codes consisting of order numbers of the font data, a conversion table creating means 11B that creates a conversion table showing correspondences between normal character codes and converted character codes, and a part of an output means 11C that outputs characters in fonts according to the font data.

The ROM 12 stores device drivers etc., of a BIOS (Basic Input/Output System) and a mouse and a keyboard, etc. By calling a boot loader from the BIOS, the OS (Operating System) can be started.

The RAM 13 consists of a volatile memory such as a DRAM etc., and stores control programs to be processed by the CPU 11, and provides a work area to the CPU 11 when it performs various controls.

The HDD 14 stores a document processing program, the OS, and a conversion table described later, etc. An SSD (Solid State Drive) may be provided instead of the HDD 14.

The input device 15 is a keyboard and a pointing device such as a mouse etc., and accepts input operations from a user. A touch panel or a voice input device may also be used as an input device.

The display control unit 16 controls drawing on the display 17 by predetermined resolution and number of colors, etc., based on screen information commanded by various application programs. The display 17 is a FPD (Flat Panel Display) using liquid crystals or organic EL, etc. The display control unit 16 and the display 17 have functions as a part of the output means 11C that outputs characters in fonts according to the font data.

The storage medium mounting unit 18 is constituted so that non-volatile memories such as USB memories and flash memories, etc., and optical disk media such as DVD-ROMs etc. , can be loaded into the storage mediummounting unit in a removable manner, and is used to read data from these storage media and write data on them.

The communication device 19 is an interface for connection to a network such as a LAN and the Internet, etc. An electronic document created by the document processing system 10 can be distributed by the communication device 19 through an arbitrary network.

The CPU 11 executes a boot program in the ROM 12, and loads the OS from the HDD 14 into the RAM 13. Then, by loading a document processing program in the present embodiment from the HDD 14 into the RAM 13 and executing it, this PC functions as the document processing system 10.

Hereinafter, operation of the document processing system constituted as described above is described.

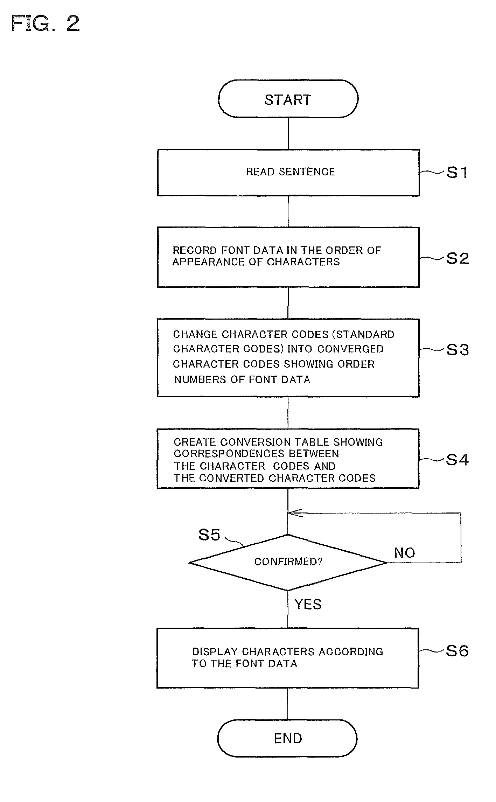

Fig. 2 is a flowchart describing operation of the document processing system according to a first embodiment of the present invention. This flow is performed according to the document processing program of the CPU 11.

First, in Step S1, the CPU 11 reads sentence data from the HDD 14 or a storage medium mounted in the storage medium mounting unit 18. Alternatively, characters may be input by the input device 15.

Next, in Step S2, the character code changing means 11A records font data of characters in the sentence in the order of appearance of the characters.

Then, in Step S3, the character code changing means 11A changes character codes of the characters the font data of which were recorded into converted character codes showing the order numbers of the font data.

Next, in Step S4, the conversion table creating means 11B creates a conversion table showing correspondences between the character codes and the converted character codes.

In Step S5, the CPU 11 waits for confirmation of text reading.

Then, in Step S6, the output means 11C displays characters in the corresponding fonts and ends this flow.

Next, a detailed example of a document processing operation of the document processing system 10 is described. Sentence example:
"SO NO TO KI , GO ICHI WA GA KKOU KA RA KAE T TA BA KA RI DA T TA ." ("It was when Goichi just came back from school." 22 Japanese characters)

When the sentence given above is read, the document processing system 10 performs the following document processing.

First, the system records font data of the characters in the sentence in the order of appearance of the characters. At the same time, the system changes character codes of the characters the font data of which were recorded into order numbers of the font data. That is, the character codes are changed as follows:
SO → No. 1
NO → No. 2
TO → No. 3
KI → No. 4
, → No. 5
GO → No. 6
ICHI → No. 7

"SO" given above is a character code of the character the font data of which was recorded, and "No. 1" is a converted character code showing an order number of the font data. Similarly, "NO" is a character code of the character the font data of which was recorded, and "No. 2" is a converted character code showing an order number of the font data. "→" means changing of the character code (standard character code) into the order number (converted character code) of the font data.

Next, a conversion table showing correspondences between the character codes (standard character codes) and the order numbers (converted character codes) of the font data is created.

Accordingly, (1) the character codes in the document processing system 10 become different from the standard codes and have random nature, and the text cannot be easily copied. That is, the standard character codes are changed into the order numbers (converted character codes) of the font data, so that it is not easy to copy the text. In paragraph [0081] of Patent Literature 1, a technology for changing the correspondences between character codes and fonts is described. In paragraph [0100] of Patent Literature 2, a technology using subset fonts for embedding font information is described. In the present embodiment, the same effects as in the systems described in Patent Literatures 1 and 2 can also be obtained. However, in Patent Literature 1, a conversion table for making the character codes random must be created in advance. On the other hand, the present embodiment has a characteristic effect of automatically creating a conversion table unique to each sentence, different from the effects of Patent Literatures 1 and 2.
(2) In addition, the character codes in the document processing system 10 are required to distinguish only characters appearing in the sentence, and are not required to distinguish all characters. Therefore, the present embodiment has a characteristic effect of reducing the number of bits of the character codes, different from the effects of Patent Literatures 1 and 2.
(3) Inaddition, font data in the document processing system 10 are of only characters appearing in the sentence, and the system does not need to be loaded with fonts of all characters. Therefore, like the system described in Patent Literature 2, an effect of reducing the font data storage capacity is obtained.
(4) Further, subset font data in the document processing system 10 has information on a conversion table, so that different from the effects of Patent Literatures 1 and 2, the document processing system has a characteristic effect of displaying an original text according to converted character codes and subset font data even if a user's terminal does not have the conversion table.
(5) Further, the document processing system 10 can restore the converted character codes to the standard character codes by using the conversion table.

An example will be described in which the document processing system 10 according to the present embodiment is applied when preparing document data.

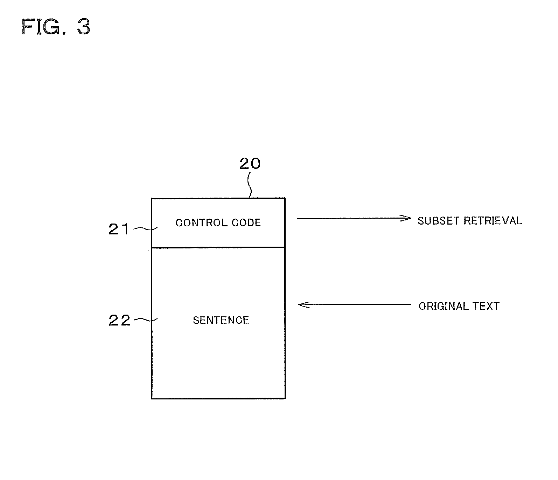

Fig. 3 is a diagram describing a structure of an electronic document subjected to document processing by the document processing system according to a first embodiment of the present invention. The electronic document 20 shown in Fig. 3 is stored in, for example, various storage media and distributed together with the storage media. The electronic document is distributed on, for example, a network by a communication means.

As shown in Fig. 3, the electronic document 20 is in a format in which a control code 21 being a subset font identification number is provided at the head, and a sentence 22 expressed by converted character codes is provided successively. By retrieving the subset fonts according to the control code 21, an original text of the sentence expressed by the converted character codes is displayed.

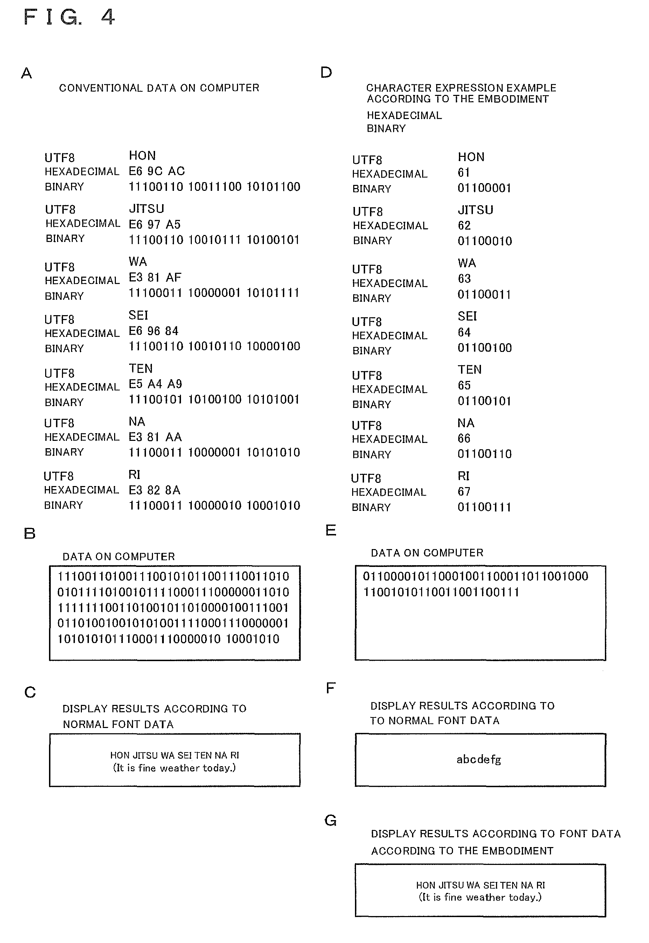

Figs. 4 are diagrams describing document data of the document processing system according to the first embodiment in comparison with a conventional example. Fig. 4A shows a structure of conventional document data on a computer, Fig. 4B shows conventional data on a computer, Fig. 4C shows display results using conventional normal font data, Fig. 4D shows an expression example of characters in the document processing system 10, Fig. 4E shows data of the document processing system 10, Fig. 4F shows normal font data of the document processing system 10 and Fig. 4G shows display results using normal font data of the document processing system 10.

### Sentence example:

"HON JITSU WA SEI TEN NA RI" (It is fine weather today. Seven Japanese characters)

In the conventional example, as shown in Fig. 4A, for example, "HON" (UTF-8) is expressed by E6 9C AC (hexadecimal) and 11100110 10011100 10101100 (binary). Therefore, the data width on the computer is as shown in Fig. 4B. The display results using normal font data are as shown in Fig. 4C. However, in the conventional example, various font data intended to be used are prepared, so that the storage capacity of the font data is large.

In contrast with the conventional example described above, in the present embodiment, font data are recorded in the order of appearance of characters in the sentence, and at the same time, character codes of the characters the font data of which were recorded are changed into order numbers of the font data, and the document data structure, data amount on the computer, and display results using the font data are different. Fig. 4A, Fig. 4B, and Fig. 4C showing the conventional example correspond to Fig. 4D, Fig. 4E, Fig. 4F, and Fig. 4G showing the present embodiment in this order.

In the present embodiment, separate from the standardized character codes, only the characters used in the sentence are converted into optimum character codes, and font data corresponding to these are prepared. In detail, conversion of the characters used in the sentence into optimum character codes is performed by recording the font data of the characters in the sentence in the order of appearance of the characters and at the same time, changing the character codes of the characters the font data of which were recorded into order numbers (converted character codes) of the font data. By replacing the font data with the converted character codes in the order of appearance of the characters in the sentence, a conversion table is automatically created as being unique to each sentence. In addition, the font data includes information on the conversion table, so that the original text is displayed. That is, by following the simple procedures in which the font data are replaced with converted character codes in the order of appearance of the characters in the sentence, complicated data processing becomes unnecessary and a management means for this also becomes unnecessary. This effect can be realized according to the idea that document data is processed within a framework of a document. In the present embodiment, conversion to optimum character codes is performed in the order of appearance of the characters in the sentence, however, without limiting to this, other modes can also be adopted. However, by performing the conversion in the order of appearance of the characters in the sentence in the same manner as in the present embodiment, the advantage that the conversion table becomes unnecessary is obtained, and this is preferable.

In the present embodiment, as shown in Fig. 4D, "HON" (UTF-8) is expressed by 61 (hexadecimal) and 01100001 (binary), and the next "JITSU" (UTF-8) is expressed by 62 (hexadecimal) (converted character code) and 01100010 (binary) (converted character code) (the same applies hereinafter), and the character codes of the characters the font data of which were recorded in the order of appearance of the characters in the sentence are changed into order numbers (converted character codes) of the font data. Therefore, the data width on the computer becomes (7 x 8 = 56 bits):
"01100001011000100110001101100100011001010110011001100111" and as is clear in comparison with the data width (7 x 8 x 3 = 168 bits) of the conventional example shown in Fig. 4B: "1110011010011100101011001110011010...1010101011100011100000 1010001010"
the data on the computer can be significantly reduced.

The display results using the normal font data of the document processing system 10 are as shown in Fig. 4F, and the content of the sentence cannot be understood. Therefore, even if the codes of the encrypted document data are deciphered, the content of the sentence cannot be understood. As shown in Fig. 4G, unless the display results using font data created according to the present embodiment are given, the content of the sentence cannot be understood. Therefore, even if the document is copied illegally or is picked during communication, the information does not leak.

A product or service required to protect sentence information such as an electronic book, can also be prevented from being diverted or stolen by preventing digital copying in standardized character codes.

Further, in the conventional example, various font data intended to be used are prepared, so that the storage capacity of the font data is large. On the other hand, in the present embodiment, it is required to prepare only font data used in the sentence, so that it is advantageous that the storage capacity of the font data is small.

Next, an example will be described in which the document processing system 10 according to the present invention is applied when restoring document data.

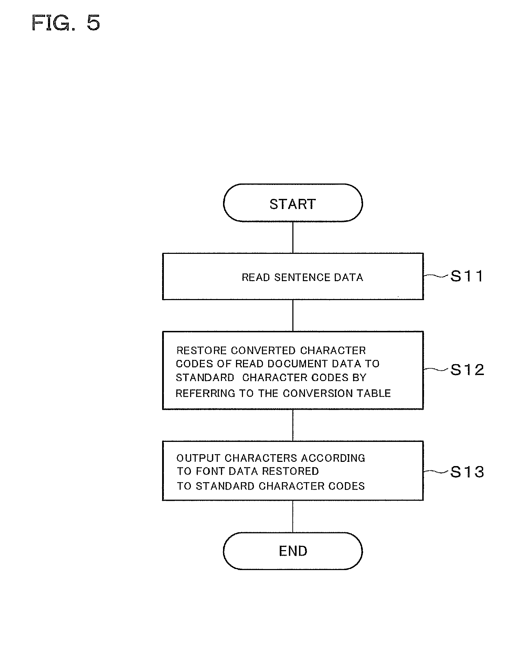

Fig. 5 is a flowchart showing an operation of restoring a document of the document processing system according to the first embodiment of the present invention. The CPU 11 includes a restoring means that restores the converted character codes to standard character codes by using the conversion table. This restoring means may be provided in another PC etc.

First, in Step S11, the CPU 11 reads document data.

Then, in Step S12, the restoring means restores converted character codes of the read document data to standard character codes by referring to a conversion table.

Next, in Step S13, the output means 11 outputs characters of the font data restored to the standard character codes and ends this flow.

Thus, the document processing system 10 can restore converted character codes to standard character codes by using a conversion table.

### (Second Embodiment)

An entire constitution of a document processing system according to a second embodiment of the present invention is the same as in Fig. 1, so that description thereof is omitted.

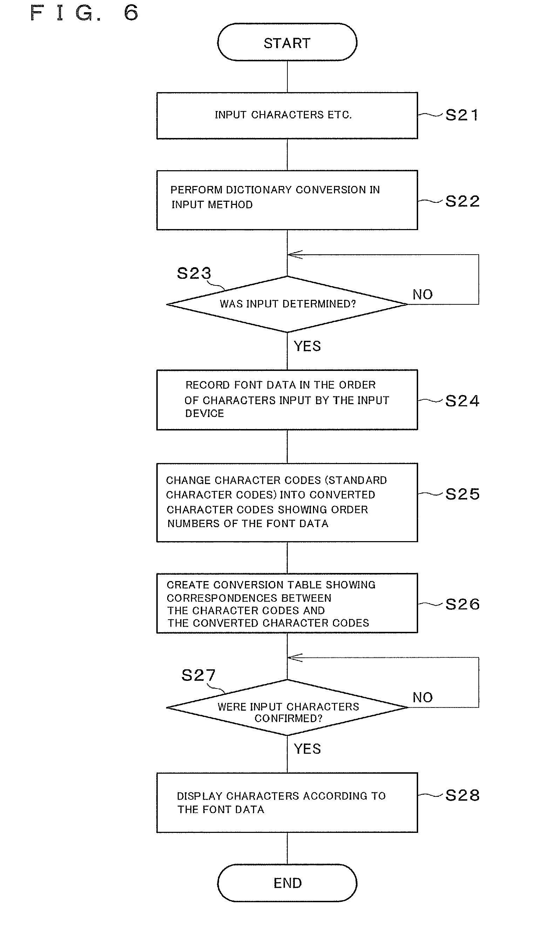

Fig. 6 is a flowchart describing operation of the document processing system according to the second embodiment of the present invention. This flow is performed according to the document processing program of the CPU 11.

First, in Step S21, characters etc., are input by the input device 15 such as a keyboard.

Then, in Step S22, the CPU 11 performs dictionary conversion in an input method. For example, dictionary conversion in the input method is kana-kanji conversion.

Next, in Step S23, the process waits for determination of the input. Determination of the input is performed by pressing a determination key or pressing the Enter key, etc.

Then, in Step S24, the character code changing means 11A records font data in the order of the characters input by the input device 15.

Next, in Step S25, the character code changing means 11A changes character codes of the characters the font data of which were recorded into converted character codes showing order numbers of the font data.

Then, in Step S26, the conversion table creating means 11B creates a conversion table showing correspondences between the character codes and the converted character codes.

In Step S27, the CPU 11 waits for confirmation of the input characters.

Then, in Step S28, the output means 11C displays the characters in the corresponding fonts and ends this flow.

Next, a preparation example of document data of the document processing system is described.

### Sentence example:

"SO NO TO KI , GO ICHI WA GA KKOU KA RA KAE T TA BA KA RI DA T TA." ("It was when Goichi just came back from school." 22 Japanese characters)

The document processing system records font data in the order of the input characters. At the same time, the system changes the character codes of the characters the font data of which were recorded into order numbers of the font data. That is, the character codes are changed as follows:
SO → No. 1
NO → No. 2
TO → No. 3
KI → No. 4
, → No. 5
GO → No. 6
ICHI → No. 7

Next, a conversion table showing correspondences between the character codes (standard character codes) and the order numbers (converted character codes) of the font data is created.

As described in detail above, according to the present embodiment, the document processing system comprises the character code changing means 11A that records font data in the order of characters input by the input device 15, and changes character codes of the characters the font data of which were recorded into converted character codes consisting of order numbers of the font data, the conversion table creating means 11B that creates a conversion table showing correspondences between the character codes and the converted character codes, and the output means 11C that outputs characters in fonts according to the font data.

Accordingly, the character codes become different from the standard codes and have random nature, and the text cannot be easily copied. Here, the conversion table is automatically created as being unique to each sentence.

The character codes are required to distinguish only characters appearing in the sentence, and not required to distinguish all characters, so that the number of bits of the character codes can be reduced.

Further, font data are of only characters appearing in the sentence, and the system does not need to be loaded with fonts of all characters, so that the font data storage capacity can be reduced.

Here, subset font data has information on the conversion table, so that even if a user's terminal does not have the conversion table, original text is displayed according to the converted character codes and the subset font data.

By using the conversion table, the converted character codes can be restored to the standard character codes.

The present invention is not limited to the above-described embodiments, and can be variously modified and carried out within the scope without departing from the spirit of the present invention.

For example, the font data can be attached to the sentence, distributed separately from the sentence, used for charging etc.

In addition, characters with codes other than the standard characters can also be easily used in the same manner as the standard characters.

It is also possible that font data with different designs are separately recorded in different areas, or recorded successively in the same area.

In each of the embodiments described above, the names of a document processing system, an electronic document, and a document processing method are used, however, these are used for convenience of description, and the device name may be an information processing device or a document processing device, and the method name may be an information processing method etc.

Any kinds, any numbers, and any connecting methods are possible in the components, for example, the external storage device and the communication device, of the document processing system described above.

The present invention is applicable not only to the Japanese language but also to various languages.

In addition, the present invention is applicable not only to the character coding system of UTF-8 but also to various kinds such as UTF-16 and UTF-32 corresponding to Unicode, Shift-JIS, and EUC, etc.

The document processing system according to the present invention can also be realized by a program for making a computer function as this document processing system. This program may be stored in a computer-readable storage medium.

The storage medium in which this program is recorded may be the ROM 12 itself shown in Fig. 1, or may be a DVD-ROM etc. , readable by being inserted in the storage medium mounting unit 18.

The storage mediummay be a magnetic tape, a cassette tape, a flexible disk, a hard disk, a CD/MO/MD, etc., or a semiconductor memory.

The document processing method described above is also realized by a program for making this document processing method function. This program is stored in a computer-readable storage medium.

All publications, patents, and patent applications referred to in this description are incorporated herein as reference.

### [Industrial Applicability]

The document processing system, the electronic document, and the document processing method according to the present invention are preferably applied to a document processing system and an electronic document with improved security technologies and compression technologies.

### [Reference Signs List]

- 10: Document processing system
- 11: CPU
- 11A: Character code changing means
- 11B: Conversion table creating means
- 11C: Output means
- 12: ROM
- 13: RAM
- 14: HDD
- 15: Input device
- 16: Display control unit
- 47: Display
- 18: Storage medium mounting unit
- 19: Communication device
- 20: Electronic document

## Claims

1. A document processing system that creates an electronic document in which font data can be embedded, comprising:
a character code changing means that records font data of characters in a sentence in the order of appearance of the characters, and changes character codes of the characters the font data of which were recorded into converted character codes consisting of order numbers of the font data;
a conversion table creating means that creates a conversion table showing correspondences between the character codes and the converted character codes; and
an output means that outputs characters in fonts according to the font data.

2. The document processing system according to Claim 1, comprising a restoring means that restores the converted character codes to standard character codes by using the conversion table.

3. A document processing system that creates an electronic document in which font data can be embedded, comprising:
an input means that inputs characters;
a character code changing means that records font data of characters input by the input means in the order of appearance of the characters, and changes character codes of the characters the font data of which were recorded into converted character codes consisting of order numbers of the font data;
a conversion table creating means that creates a conversion table showing correspondences between the character codes and the converted character codes; and
an output means that outputs characters in fonts according to the font data.

4. The document processing system according to any of Claims 1 to 3, wherein the output means displays characters according to the font data.

5. An electronic document created by the document processing system according to any of Claims 1 to 4.

6. The electronic document according to Claim 5, wherein the electronic document is in a format in which a control code being a subset font identification number is provided at the head, and a sentence expressed by converted character codes is provided successively.

7. A document processing method for creating an electronic document in which font data can be embedded, comprising the steps of:
recording font data of characters in a sentence in the order of appearance of the characters, and changing character codes the font data of which were recorded into converted character codes consisting of order numbers of the font data;
creating a conversion table showing correspondences between the character codes and the converted character codes; and
outputting characters in fonts according to the font data.

8. A program for making a computer function as the document processing system according to Claim 1.

9. A computer-readable storage medium in which a program for making a computer function as the document processing system according to Claim 1 is recorded.
